# EUROPEAN PATENT APPLICATION

(11) **EP 4 841 796 A1**
(43) Date of publication of application: **18.11.2026**
(21) Application number: 26163919.9
(22) Date of filing: 11.03.2026
(51) Int. Cl.: H01M 50/507, H01M 50/519, H01M 50/526, H01M 50/524

(54) **BUSBAR ASSEMBLY AND BATTERY MODULE INCLUDING SAME**

(30) Priority: 15.05.2025 KR 20250063079
(71) Applicant: SAMSUNG SDI CO., LTD., Yongin-si, Gyeonggi-do 17084 (KR)
(72) Inventor: LEE, Hyeok, 17084 YONGIN-SI (KR)
(74) Representative: Regimbeau

(57) **Abstract**

A busbar assembly, including an insulating member (110) having a plurality of through-holes (112) and a bridge portion (114) between the plurality of through-holes, a busbar (120) including a plurality of base portions (122) and connection portions (124) protruding from the plurality of base portions, wherein the plurality of base portions are below the insulating member (110) corresponding to the plurality of through-holes (112), and a circuit board (130) connected to the busbar (120), the circuit board being below the insulating member (110) and having a shape extending in a first direction, wherein an area of each of the plurality of through-holes (112) is smaller than an area of each of the plurality of base portions (122).

## Description

### TECHNICAL FIELD

The present disclosure relates to a busbar assembly and a battery module including the same.

### TECHNICAL BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be used as a single cell, as in small electronic devices, or may be used in a module state in which a plurality of cells are electrically connected, or in a pack state in which a plurality of modules are electrically connected, as for driving a motor. When battery cells are configured as a module pack, electrical connection between the battery cells is required, and a busbar connecting between electrode terminals may be used for the electrical connection.

The above information disclosed in this Background section is for enhancement of understanding of the background of the present disclosure, and therefore, it may contain information that does not constitute related (or prior) art.

### SUMMARY

The invention relates to a busbar assembly and a battery module according to the appended claims.

Embodiments include a busbar assembly, including an insulating member having a plurality of through-holes and a bridge portion between the plurality of through-holes, a busbar including a plurality of base portions and connection portions protruding from the plurality of base portions, wherein the plurality of base portions are below the insulating member corresponding to the plurality of through-holes, and a circuit board connected to the busbar, the circuit board being below the insulating member and having a shape extending in a first direction, wherein an area of each of the plurality of through-holes is smaller than an area of each of the plurality of base portions.

A lower surface of the insulating member may include a first recessed portion connected to the plurality of through-holes in a second direction intersecting the first direction, and a second recessed portion connected to the first recessed portion, the second recessed portion extending in the first direction.

The plurality of through-holes and the first recessed portion may correspond to the plurality of base portions, a plurality of base portions being in the plurality of insertion portions.

The plurality of through-holes may be outward from a center of the insulating member relative to the first recessed portion.

The bridge portion may be between the plurality of insertion portions and protrudes from the first recessed portion.

A location of the busbar is such that the connection portions correspond to a lower side of the bridge portion.

The second recessed portion may correspond to the circuit board.

The circuit board may include a body portion extending in the first direction, and a tab portion on a part of a surface of the busbar, the tab portion being electrically connected to the busbar.

The insulating member may include at least one of polypropylene, polyamide, and polycarbonate.

Embodiments include a battery module, including a plurality of battery cells in a first direction, the plurality of battery cells including electrode terminals, and a busbar assembly above the plurality of battery cells, wherein the busbar assembly includes a first insulating member having a plurality of through-holes and a bridge portion between the plurality of through-holes, a busbar including a plurality of base portions and connection portions protruding from the plurality of base portions, wherein the plurality of base portions are below the first insulating member corresponding to the plurality of through-holes, and a circuit board connected to the busbar, the circuit board being below the first insulating member and having a shape extending in the first direction, and wherein an area of each of the plurality of through-holes is smaller than an area of each of the plurality of base portions.

A lower surface of the first insulating member may include a first recessed portion connected to the plurality of through-holes in a second direction intersecting the first direction, and a second recessed portion connected to the first recessed portion, the second recessed portion extending in the first direction.

The plurality of through-holes and the first recessed portion may correspond to the plurality of base portions, a plurality of base portions being in the plurality of insertion portions.

The plurality of through-holes may be outward from a center of the first insulating member relative to the first recessed portion.

The bridge portion may be between a plurality of insertion portions and protrudes from the first recessed portion.

A location of the busbar may be such that the connection portions correspond to a lower side of the bridge portion.

The second recessed portion may correspond to the circuit board.

The circuit board may include a body portion extending in the first direction, and a tab portion on a part of a surface of the busbar, the tab portion being electrically connected to the busbar.

The first insulating member may include at least one of polypropylene, polyamide, and polycarbonate.

The busbar assembly may further include a second insulating member on at least a part of a surface of the plurality of base portions exposed through the plurality of through-holes.

Each of the plurality of battery cells may include a case, an electrode assembly accommodated within the case, and a cap plate configured to seal the case.

### BRIEF DESCRIPTION OF DRAWINGS

Features will become apparent to those of ordinary skill in the art by describing in detail exemplary embodiments with reference to the attached drawings, in which:
FIG. 1 is a perspective view illustrating an example of a battery module according to an embodiment of the present disclosure;
FIG. 2 is a perspective view illustrating an example of a battery module with a welded portion exposed according to an embodiment of the present disclosure;
FIG. 3 is an exploded perspective view illustrating an example of a battery module according to an embodiment of the present disclosure;
FIG. 4 is a top plan view illustrating an example of a busbar assembly according to an embodiment of the present disclosure;
FIG. 5 is a bottom plan view illustrating an example of a busbar assembly according to an embodiment of the present disclosure;
FIG. 6 is an exploded perspective view illustrating an example of a busbar assembly according to an embodiment of the present disclosure;
FIG. 7 is a side cross-sectional view illustrating an example of a busbar assembly according to an embodiment of the present disclosure;
FIG. 8 is a perspective view of a battery module for explaining a welding process according to an embodiment of the present disclosure;
FIG. 9 is a cross-sectional view illustrating a cross-section taken along line A-A' of FIG. 8; and
FIG. 10 is a side cross-sectional view of a battery module for explaining a welding process according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

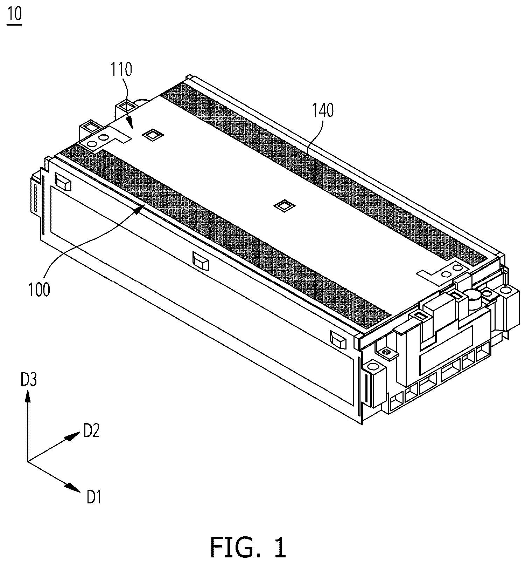

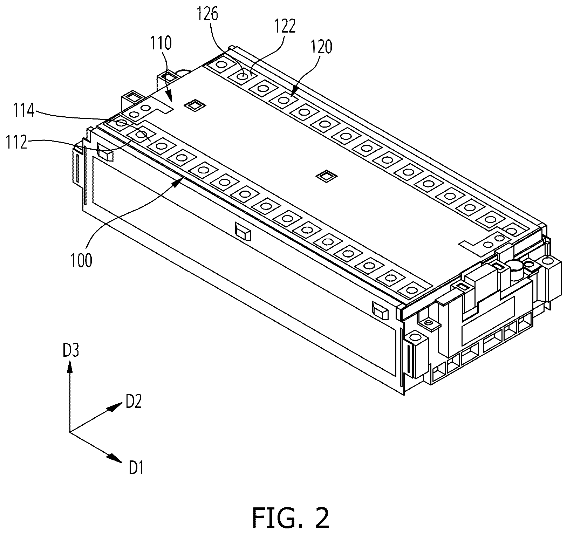

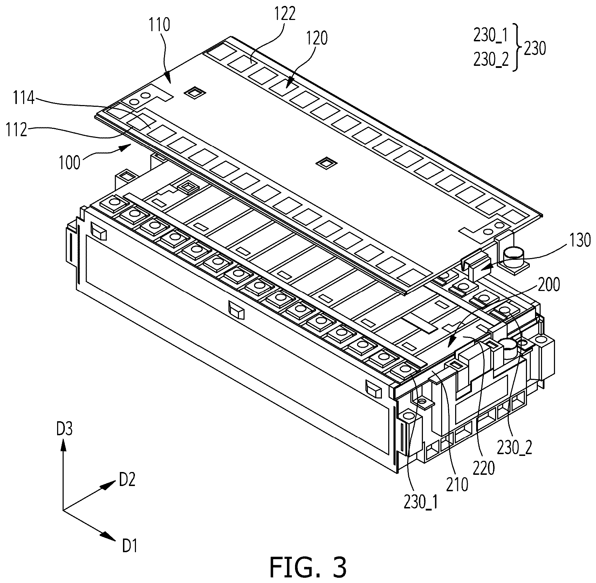

FIG. 1 is a perspective view illustrating an example of a battery module according to an embodiment of the present disclosure, FIG. 2 is a perspective view illustrating an example of a battery module with a welded portion exposed according to an embodiment of the present disclosure, and FIG. 3 is an exploded perspective view illustrating an example of a battery module according to an embodiment of the present disclosure.

Referring to FIGS. 1 to 3, a battery module 10 may include a busbar assembly 100, a plurality of battery cells 200, a side plate, and an end plate. Although 15 battery cells are shown in FIG. 3, any number of battery cells may be included in the battery module 10. In addition, the number and arrangement of the plurality of battery cells 200 may be appropriately changed as necessary.

The busbar assembly 100 may be disposed on an upper portion of the plurality of battery cells 200. The busbar assembly 100 may electrically connect the plurality of battery cells 200 including an electrode terminal 230. The busbar assembly 100 may have a shape extending in a direction in which the plurality of battery cells 200 are arranged. For example, when the plurality of battery cells 200 are arranged in a first direction (D1 direction), the busbar assembly 100 may have a shape extending in the first direction (D1 direction). However, the busbar assembly 100 may have various shapes other than that shown in FIG. 3.

The busbar assembly 100 may include a first insulating member 110, a busbar 120, a circuit board 130, and a second insulating member 140.

The first insulating member 110 may include a plurality of through-holes 112 and a bridge portion 114 located between the plurality of through-holes 112. The plurality of through-holes 112 may be formed at positions corresponding to (e.g., aligned with) a positive electrode terminal 230_1 and a negative electrode terminal 230_2 of the plurality of battery cells 200. The plurality of through-holes 112 may expose at least a part of a surface of the busbar 120. According to an embodiment, an area of each of the plurality of through-holes 112 may be smaller than an area of each of a plurality of base portions 122 of the busbar 120. The surface of the busbar 120 exposed through the plurality of through-holes 112 may be welded.

The first insulating member 110 may be disposed on an upper side of the busbar 120 and the circuit board 130, and may be coupled with the busbar 120 and the circuit board 130. For example, the first insulating member 110 may be coupled with the busbar 120 and the circuit board 130 through a molding, a hook structure, or the like, but this may vary.

The first insulating member 110 may be a substantially rectangular plate and may be made of an insulating material. The first insulating member 110 may be manufactured from plastic. For example, the first insulating member 110 may include at least one of polypropylene (PP), polyamide (PA), and polycarbonate (PC).

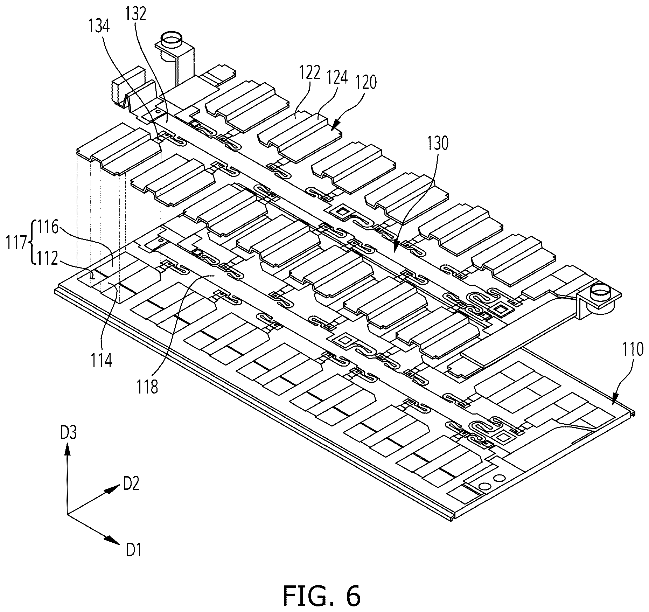

According to an embodiment, the first insulating member 110 may include a first recessed portion and a second recessed portion. Specifically, the first recessed portion may be formed to be connected with the plurality of through-holes 112 in a second direction (D2 direction) intersecting a first direction (D1). The second recessed portion may be connected to the first recessed portion and may be formed to extend in the first direction (D1 direction). This will be described in more detail later with reference to FIG. 6.

The busbar 120 may electrically connect the positive electrode terminal 230_1 and the negative electrode terminal 230_2 of the plurality of battery cells 200. The busbar 120 may connect the plurality of battery cells 200 in series and/or in parallel. The busbar 120 may include a plurality of busbars 120 to electrically connect the plurality of battery cells 200 to each other. For example, the busbar 120 may electrically connect the positive electrode terminal 230_1 and the negative electrode terminal 230_2 of adjacent of the plurality of battery cells 200. As another example, the busbar 120 may electrically connect the positive electrode terminals 230_1 of adjacent of the plurality of battery cells 200 to each other. The busbar 120 may be connected to the positive electrode terminal 230_1 and/or the negative electrode terminal 230_2 by a method such as welding.

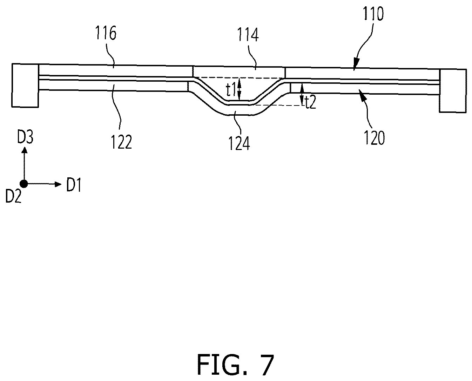

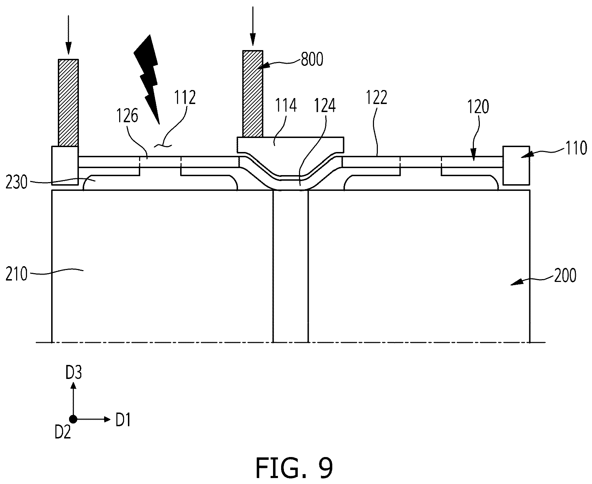

According to an embodiment, the busbar 120 may include a plurality of base portions 122 and a connection portion located between the plurality of base portions 122. The busbar 120 may include a welded portion 126 (see FIG. 9) formed by welding an area where the plurality of base portions 122 are exposed through the plurality of through-holes 112. The connection portion may have a shape protruding from the plurality of base portions 122. The busbar 120 may be disposed below the first insulating member 110 such that the plurality of base portions 122 correspond to the plurality of through-holes 112. This will be described in more detail later with reference to FIG. 7.

The circuit board 130 is connected to the busbar 120 and may be disposed below the first insulating member 110. The circuit board 130 may have a shape extending in the first direction (D1 direction). The circuit board 130 may be formed to pass through a central portion along a second direction (D2 direction) of a cap plate 220 of each of the plurality of battery cells 200.

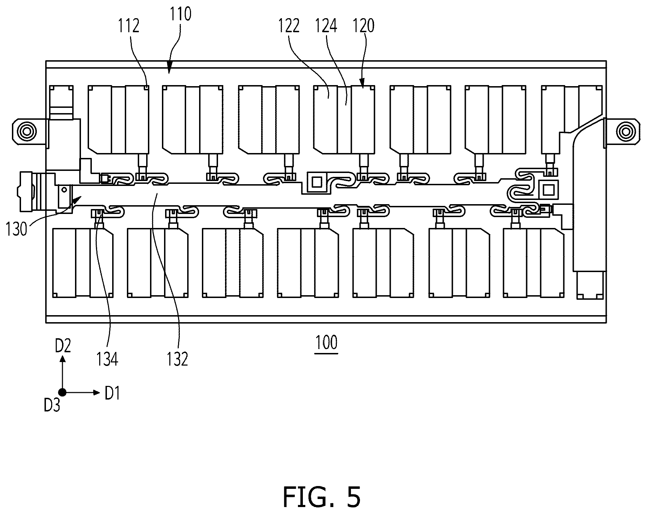

According to an embodiment, the circuit board 130 may include a body portion and a tab portion. The body portion may have a shape extending in the first direction (D1 direction). The tab portion may be disposed on at least a part of a surface of the busbar 120 and may be electrically connected to the busbar 120. This will be described in more detail later with reference to FIG. 5.

The second insulating member 140 (see FIG. 1) may be disposed on at least a part of a surface of the plurality of base portions 122 of the busbar 120 exposed through the plurality of through-holes 112. For example, the second insulating member 140 may be disposed to cover all of the surfaces of the plurality of base portions 122 exposed through the plurality of through-holes 112. The second insulating member 140 may have a shape extending in the first direction (D1 direction). The second insulating member 140 may be a tape including an insulating sheet and having an adhesive material applied to one surface thereof. As a result, the busbar assembly 100 may be insulated or protected from the outside.

Each of the plurality of battery cells 200 may include a case 210, an electrode assembly accommodated inside the case 210, and a cap plate 220 for sealing the case 210. The plurality of battery cells 200 may be, for example, prismatic batteries. In this case, prismatic type of the plurality of battery cells 200 may be stacked side by side and included in the battery module 10 in a form arranged in the first direction (D1 direction). The plurality of battery cells 200 are arranged side by side, and the electrode terminals 230, which are the positive electrode terminal 230_1 and the negative electrode terminal 230_2 of each of the plurality of battery cells 200, may be variously arranged according to a design. For example, as shown in FIG. 3, the positive electrode terminal 230_1 and the negative electrode terminal 230_2 may be respectively disposed on left and right sides (e.g., in the orientation shown in FIG. 3) of the cap plate 220. And, a vent may be provided between the positive electrode terminal 230_1 and the negative electrode terminal 230_2. Meanwhile, the plurality of battery cells 200 may be pouch-type battery cells, cylindrical battery cells, or the like, but this may vary.

The case 210 may form the overall outer appearance of the plurality of battery cells 200 and may be made of a conductive metal, such as aluminum, aluminum alloy, or nickel-plated steel. In addition, the case 210 may provide a space in which the electrode assembly is accommodated.

The cap plate 220 is configured to cover an opening of the case 210, and the case 210 and the cap plate 220 may be made of a conductive material. Here, the positive and negative electrode terminals 230_1 and 230_2, respectively, which are electrically connected to a positive electrode or a negative electrode, may be installed to penetrate the cap plate 220 and protrude outward.

In addition, outer peripheral surfaces (e.g., circumferential surfaces) of upper pillars of the positive and negative electrode terminals 230_1 and 230_2 protruding outwardly from the cap plate 220 may be threaded and may be fixed to the cap plate 220 by utilizing nuts.

In addition, the cap plate 220 may be made of a thin plate and may be coupled to the opening in the case 210, and an electrolyte injection port into which a sealing stopper may be installed may be located (e.g., formed) in the cap plate 220, and a vent portion having a notch may be installed.

The plurality of battery cells 200 may be lithium battery cells, sodium battery cells, or the like. However, the plurality of battery cells 200 may include any battery that may repeatedly provide electricity through charging and discharging. According to an embodiment, when the plurality of battery cells 200 are lithium battery cells, the plurality of battery cells 200 may be used in an electric vehicle (EV) because life characteristics and high-rate characteristics are excellent. For example, the plurality of battery cells 200 may be used in a hybrid vehicle such as a plug-in hybrid electric vehicle (PHEV). In addition, the lithium battery cell may be used in a field that requires storage of a large amount of electric power. For example, the lithium battery cell may be used in an electric bicycle, a power tool, an energy storage system (ESS), and the like.

A side plate and an end plate may accommodate the plurality of battery cells 200. According to an embodiment, the side plates may be disposed as a pair on both side surfaces of the plurality of battery cells 200. The end plates are coupled to the side plates to be orthogonal to each other, and may be disposed as a pair to support outermost surfaces along one direction (for example, an arrangement direction of the plurality of battery cells 200) of the plurality of battery cells 200. The battery module 10 may further include an end insulating cover (not shown) interposed between the plurality of battery cells 200 and the end plate.

The side plates may be disposed at both ends in a second direction (D2 direction) and connected to the end plates. That is, the side plates may accommodate and support the plurality of battery cells 200 on both sides in a width direction (D2 direction) of the battery module 10. The side plates may be formed of metal (for example, stainless steel) and may reinforce a mechanical strength of the battery module 10 at both ends in the second direction (D2 direction).

The end plates may be connected to each other with the side plates by welding. The end plates may be formed of metal (for example, stainless steel) and may reinforce a mechanical strength of the battery module 10 at an outermost side in a first direction (D1 direction).

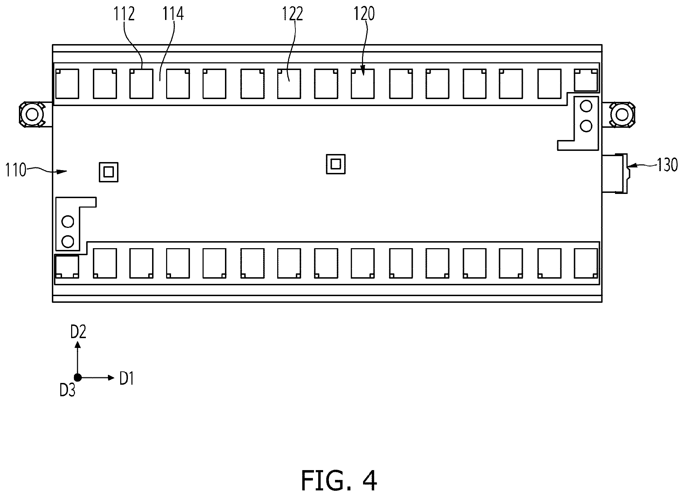

FIG. 4 is a top plan view illustrating an example of a busbar assembly according to an embodiment of the present disclosure, and FIG. 5 is a bottom plan view illustrating an example of a busbar assembly according to an embodiment of the present disclosure.

Referring to FIGS. 4 and 5, a busbar assembly 100 may include a first insulating member 110, a busbar 120, and a circuit board 130.

The first insulating member 110 may include a plurality of through-holes 112 and a bridge portion 114. A shape of the plurality of through-holes 112 may correspond to a shape of a plurality of base portions 122 of the busbar 120. For example, when the shape of the plurality of base portions 122 of the busbar 120 is substantially rectangular, the shape of the plurality of through-holes 112 may be substantially rectangular. However, the shape of the plurality of through-holes 112 may have various shapes.

According to an embodiment, an area of each of the plurality of through-holes 112 may be smaller than an area of each of the plurality of base portions 122 of the busbar 120. Specifically, based on a first direction (D1 direction), a length of each of the plurality of through-holes 112 may be greater than or equal to a length of each of the plurality of base portions 122. Based on a second direction (D2 direction), a length of each of the plurality of through-holes 112 may be smaller than a length of each of the plurality of base portions 122 of the busbar 120.

The busbar 120 may include a plurality of base portions 122 and a connection portion 124 located between the plurality of base portions 122.

A shape of each of the plurality of base portions 122 may have a substantially rectangular shape when viewed from an upper side (D3 direction). However, the shape of each of the plurality of base portions 122 may have any shape such as a square, a semicircle, etc.

The connection portion 124 has a bent and protruding shape, and may reinforce rigidity of the busbar 120. That is, an impact applied to the busbar 120 may be absorbed by an elastic structure of the connection portion 124.

The connection portion 124 may be disposed below the bridge portion 114 of the first insulating member 110, for example, to fix the busbar 120 in a first direction (D1 direction). The connection portion 124 may be formed in a shape protruding from the plurality of base portions 122. Therefore, the busbar 120 may include the plurality of base portions 122 and the connection portion 124 formed to have a step between the base portions 122.

The circuit board 130 may include a measurement unit that measures a temperature of a battery cell or measures a voltage of the battery cell. For example, the circuit board 130 may include a plurality of measurement units to measure temperatures and voltages of various parts of the plurality of battery cells. In addition, the circuit board 130 may be connected to an external system by having a connector coupled to one end thereof.

According to an embodiment, the circuit board 130 may be a Flexible Printed Circuit Assembly (FPCA) or a Flexible Printed Circuit Board (FPCB).

According to an embodiment, the circuit board 130 may include a body portion 132 and a tab portion 134. The body portion 132 may have a shape extending in a first direction (D1 direction). The tab portion 134 may be disposed on a part of a surface of the busbar 120 and may be electrically connected to the busbar 120. The tab portion 134 may be welded to a part of the surface of the busbar 120. Specifically, the tab portion 134 may be connected to the plurality of base portions 122 of the busbar 120. The tab portion 134 may include nickel (Ni), but this may vary.

FIG. 6 is an exploded perspective view illustrating an example of a busbar assembly according to an embodiment of the present disclosure. FIG. 6 shows a state in which a lower surface of the busbar assembly 100 faces upward for convenience of description. Descriptions of configurations shown in FIG. 6 that have been described in FIGS. 4 and 5 will be omitted.

Referring to FIG. 6, a first insulating member 110 may include a plurality of through-holes 112, a bridge portion 114, a first recessed portion 116, a plurality of insertion portions 117, and a second recessed portion 118.

According to an embodiment, the bridge portion 114 may be located between the plurality of insertion portions 117 and may be formed to protrude from the first recessed portion 116. The plurality of insertion portions 117 may include the plurality of through-holes 112 and the first recessed portion 116 connected to the plurality of through-holes 112. As a result, when a plurality of base portions 122 of the busbar 120 are inserted into the plurality of insertion portions 117, the bridge portion 114 may come into contact with a connection portion 124 of the busbar 120.

According to an embodiment, the first recessed portion 116 and the second recessed portion 118 may be formed in a recessed shape in a thickness direction (D3 direction) of the first insulating member 110. Here, the 'thickness direction' may mean a direction from a lower surface of the first insulating member 110 toward an opposite upper surface.

According to an embodiment, the first recessed portion 116 may be formed on a lower surface of the first insulating member 110 to be connected with the plurality of through-holes 112 in a second direction (D2 direction) intersecting a first direction (D1 direction). Here, the plurality of through-holes 112 and the first recessed portion 116 may correspond to (e.g., align with) the plurality of base portions 122 and form a plurality of insertion portions 117 into which the plurality of base portions 122 are inserted.

According to an embodiment, based on a first direction (D1 direction), a length of the through-hole 112 and a length of the first recessed portion 116 may each be greater than or equal to a length of the base portion 122. Based on a second direction (D2), a sum of a length of the through-hole 112 and a length of the first recessed portion 116 may be greater than or equal to a length of the base portion 122.

According to an embodiment, the plurality of through-holes 112 may be formed outward from a center of the first insulating member 110 along a second direction (D2 direction) relative to the first recessed portion 116. However, the plurality of through-holes 112 may be formed inward toward the center of the first insulating member 110 along the second direction (D2 direction) relative to the first recessed portion 116.

According to an embodiment, a depth of the first recessed portion 116 along a third direction (D3 direction) may correspond to a thickness of the plurality of base portions 122 along the third direction (D3 direction). Here, the meaning of 'corresponds' may mean that the depth of the first recessed portion 116 along the third direction (D3 direction) is the same as or substantially the same as the thickness of the plurality of base portions 122 along the third direction (D3 direction). However, the depth of the first recessed portion 116 along the third direction (D3 direction) may be smaller or larger than the thickness of the plurality of base portions 122 along the third direction (D3 direction).

According to an embodiment, an area of each of the plurality of insertion portions 117 may correspond to an area of each of the plurality of base portions 122. That is, a sum of an area of the through-hole 112 and an area of the first recessed portion 116 connected to the through-hole 112 in a second direction (D2 direction) may correspond to the area of each of the plurality of base portions 122. Here, the meaning of 'corresponds' may mean that the area of each of the plurality of insertion portions 117 is the same as or substantially the same as the area of each of the plurality of base portions 122.

According to an embodiment, the second recessed portion 118 may be connected to the first recessed portion 116 and may be formed to extend in a first direction (D1 direction). The second recessed portion 118 may be formed to correspond to (e.g., align with) the circuit board 130. As a result, at least a part of the circuit board 130 along a third direction (D3 direction) may be inserted into the second recessed portion 118.

According to an embodiment, a depth of the second recessed portion 118 along a third direction (D3 direction) may correspond to a thickness of the circuit board 130 along the third direction (D3 direction). Here, the meaning of 'corresponds' may mean that the depth of the second recessed portion 118 along the third direction (D3 direction) is the same as or substantially the same as the thickness of the circuit board 130 along the third direction (D3 direction). However, the depth of the second recessed portion 118 along the third direction (D3 direction) may be smaller or larger than the thickness of the circuit board 130 along the third direction (D3 direction).

Due to the characteristic structure described above, a height of the busbar assembly may be reduced to improve energy density. In addition, a manufacturing process of the busbar assembly may be simplified to reduce manufacturing costs.

FIG. 7 is a side cross-sectional view illustrating an example of a busbar assembly according to an embodiment of the present disclosure. FIG. 7 shows a cross-section of the busbar assembly cut along a first direction (D1 direction) to explain a bridge portion 114 and a first recessed portion 116. Descriptions of configurations shown in FIG. 7 that have been described in FIGS. 4 to 6 will be omitted.

Referring to FIG. 7, a first insulating member 110 may include a bridge portion 114 and a first recessed portion 116. A busbar 120 may include a plurality of base portions 122 and a connection portion 124. The plurality of base portions 122 of the busbar 120 may be disposed below the first insulating member 110 to correspond to (e.g., align with) the first recessed portion 116.

The bridge portion 114 may be located between the first recessed portions 116 and may be formed to protrude from the first recessed portion 116. The connection portion 124 of the busbar 120 may be disposed to correspond to a lower side of the bridge portion 114.

According to an embodiment, a shape of a lower surface of the bridge portion 114 may correspond to a shape of an upper surface of the connection portion 124. As a result, the lower surface of the bridge portion 114 may be in uniform contact with the upper surface of the connection portion 124.

According to an embodiment, based on a first direction (D1 direction), a length of the connection portion 124 may be greater than a length of the bridge portion 114. The connection portion 124 may be formed to protrude lower than a lower surface of the plurality of base portions 122 in a third direction (D3 direction). However, a size of the connection portion 124 may vary.

According to an embodiment, based on a third direction (D3 direction), a length t1 by which the bridge portion 114 protrudes from the first recessed portion 116 may correspond to a length t2 by which the connection portion 124 protrudes from the base portion 122 (e.g., which includes the connection portion 124). Here, the meaning of 'corresponds' may mean that the length t1 by which the bridge portion 114 protrudes is the same as or substantially the same as the length t2 by which the connection portion 124 protrudes.

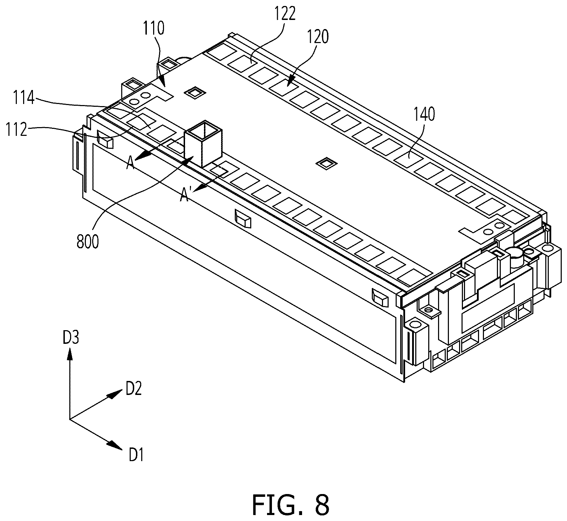

FIG. 8 is a perspective view of a battery module for explaining a welding process according to an embodiment of the present disclosure, and FIG. 9 is a cross-sectional view illustrating a cross-section taken along line A-A' of FIG. 8. Descriptions of configurations shown in FIGS. 8 and 9 that have been described in FIGS. 4 to 7 will be omitted.

Referring to FIG. 8, a busbar assembly 100 may be disposed on an upper portion of a plurality of battery cells. A busbar 120 may be coupled to the plurality of battery cells by welding. Specifically, a surface of a base portion 122 exposed through a plurality of through-holes 112 of the busbar 120 may be welded. As a result, the base portion 122 may be coupled to an electrode terminal of the plurality of battery cells.

The busbar 120 may include a welded portion 126 formed by welding the surface of the plurality of base portions 122 exposed through the plurality of through-holes 112. The welded portion 126 may be located at an approximate center of each of the plurality of base portions 122. However, a position of the welded portion 126 may be formed at various positions.

Welding of the base portion 122 and the electrode terminal may be performed using a shielding jig 800 for stable work. The shielding jig 800 includes a highly durable material such as stainless steel, aluminum, or copper, and may include an insulating material such as ceramic, polyimide, Teflon, glass fiber, or the like.

The shielding jig 800 may be disposed on an upper portion of the busbar assembly 100. Specifically, the shielding jig 800 may be disposed to contact a periphery of the through-hole 112. Thereafter, welding between the busbar 120 and the electrode terminal may be performed while the shielding jig 800 presses the periphery of the through-hole 112. As a result, the shielding jig 800 may avoid direct contact with the busbar 120, thereby minimizing damage and/or deformation of the busbar 120.

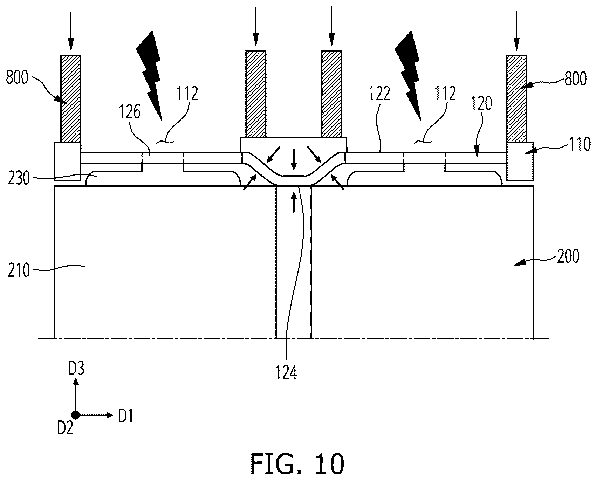

FIG. 10 is a side cross-sectional view of a battery module for explaining a welding process according to an embodiment of the present disclosure. Descriptions of configurations shown in FIG. 10 that have been described in FIGS. 4 to 9 will be omitted.

Referring to FIG. 10, welding between a busbar 120 and an electrode terminal may be performed while a shielding jig 800 simultaneously presses a periphery of each of a plurality of through-holes 112. At this time, by simultaneously pressing the periphery of each of the plurality of through-holes 112, force may be applied to a connection portion 124, which may cause breakage and/or deformation.

The bridge portion 114 is located to correspond to an upper side of the connection portion 124 and may contact an upper surface of the connection portion 124. As a result, the bridge portion 114 may support the connection portion 124 to prevent breakage and/or deformation of the connection portion 124.

When manufacturing a battery module pack, a busbar may be used with other components such as an insulating member and a circuit board. At this time, a problem may occur in that a manufacturing process of the battery module pack becomes complicated or a height of the battery module pack increases, thereby reducing energy density.

According to some embodiments of the present disclosure, a busbar assembly with a simplified structure that may reduce manufacturing costs and a battery module including the same may be provided.

According to some embodiments of the present disclosure, because a structure of the busbar assembly is simplified and a height of the busbar assembly is reduced, a busbar assembly that may improve energy density and a battery module including the same may be provided.

According to some embodiments of the present disclosure, when welding between a busbar and an electrode terminal, a first insulating member may protect the busbar to prevent damage and/or deformation of the busbar.

Although the present disclosure has been described above with respect to embodiments thereof, the present disclosure is not limited thereto. Various modifications and variations can be made thereto by those skilled in the art.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A busbar assembly, comprising:
an insulating member (110) having a plurality of through-holes (112) and a bridge portion (114) between the plurality of through-holes (112);
a busbar (120) including a plurality of base portions (122) and connection portions (124) protruding from the plurality of base portions (122), wherein the plurality of base portions (122) are below the insulating member (110) in alignment with the plurality of through-holes (112); and
a circuit board (130) connected to the busbar (120), the circuit board (130) being below the insulating member (110) and having a shape extending in a first direction,
wherein an area of each of the plurality of through-holes (112) is smaller than an area of each of the plurality of base portions (122).

2. The busbar assembly as claimed in claim 1, wherein a lower surface of the insulating member (110) comprises:
a first recessed portion (116) connected to the plurality of through-holes (112) in a second direction intersecting the first direction; and
a second recessed portion (118) connected to the first recessed portion (116), the second recessed portion (118) extending in the first direction.

3. The busbar assembly as claimed in claim 2, wherein the plurality of through-holes (112) and the first recessed portion (116) are aligned with the plurality of base portions (122), the plurality of base portions (122) being in a plurality of insertion portions (117).

4. The busbar assembly as claimed in claim 3, wherein the plurality of through-holes (112) are outward from a center of the insulating member (110) relative to the first recessed portion (116).

5. The busbar assembly as claimed in claim 3 or claim 4, wherein the bridge portion (114) is between the plurality of insertion portions (117) and protrudes from the first recessed portion (116).

6. The busbar assembly as claimed in claim 5, wherein a location of the busbar (120) is such that the connection portions (124) are aligned with a lower side of the bridge portion (114).

7. The busbar assembly as claimed in any one of claims 2 to 6, wherein the second recessed portion (118) is aligned with the circuit board (130).

8. The busbar assembly as claimed in any one of claims 1 to 7, wherein the circuit board (130) comprises:
a body portion (132) extending in the first direction; and
a tab portion (134) on a part of a surface of the busbar (120), the tab portion (134) being electrically connected to the busbar (120).

9. The busbar assembly as claimed in any one of claims 1 to 8, wherein the insulating member (110) comprises at least one of polypropylene, polyamide, and polycarbonate.

10. The busbar assembly as claimed in any one of claims 1 to 9, further comprising a second insulating member (140) on at least a part of a surface of the plurality of base portions (122) exposed through the plurality of through-holes (112).

11. A battery module (10), comprising:
a plurality of battery cells (200) in a first direction, the plurality of battery cells (200) comprising electrode terminals (230); and
a busbar assembly (100) according to any one of claims 1 to 9 above the plurality of battery cells.

12. The battery module as claimed in claim 11, wherein each of the plurality of battery cells comprises:
a case (210);
an electrode assembly accommodated within the case; and
a cap plate (220) configured to seal the case.
